# EUROPÄISCHE PATENTSCHRIFT

(11) **EP 1 295 089 B1**
(45) Veröffentlichungstag und Bekanntmachung des Hinweises auf die Patenterteilung: **10.08.2005**
(21) Anmeldenummer: 01953791.9
(22) Anmeldetag: 16.06.2001
(51) Int. Cl.: G01D 5/22, G01B 7/00, G01B 7/30

(54) **VORRICHTUNG ZUR BERÜHRUNGSLOSEN WEGMESSUNG, INSBESONDERE ZUR STELLUNGS- UND BEWEGUNGSERFASSUNG**
DEVICE FOR CONTACTLESS MEASUREMENT OF A DISPLACEMENT PATH, ESPECIALLY FOR THE DETECTION OF POSITION AND MOVEMENT
DISPOSITIF POUR MESURER LE DEPLACEMENT SANS CONTACT, NOTAMMENT POUR SAISIR LA POSITION ET LE MOUVEMENT

(30) Priorität: 26.06.2000 DE 20011223 U
(43) Veröffentlichungstag der Anmeldung: 26.03.2003
(73) Patentinhaber: Kindler, Ulrich, 22143 Hamburg (DE)
(72) Erfinder: Kindler, Ulrich, 22143 Hamburg (DE)
(74) Vertreter: Kloiber, Thomas, Dr. Dipl.-Phys.
(86) Internationale Anmeldenummer: PCT/DE2001/002260
(87) Internationale Veröffentlichungsnummer: WO 2002/001159

(56) Entgegenhaltungen:
- EP-A- 1 158 266
- WO-A-97/39312
- DE-A- 4 213 866
- DE-A- 10 044 839
- DE-A- 19 619 197
- FR-A- 2 605 400
- FR-A- 2 682 760
- GB-A- 1 157 179
- US-A- 3 504 276
- US-A- 4 737 698
- US-A- 5 083 084
- US-A- 5 699 025

## Beschreibung

Die vorliegende Erfindung betrifft eine Vorrichtung zur berührungslosen Wegmessung, insbesondere für Stellungs- und Bewegungserfassungen eines Meßobjektes, mit einer Sensorelektronik zur Bereitstellung eines Wechselstromes und Auswertung dessen Änderungen und einem induktiven Sensor mit mindestens einer Spule, wobei jede Spule (15) mit in einer Ebene schneckenförmig angeordnetem Leiter (22) ausgebildet ist und eine von dessen zwei ebenen Oberflächen eine Messfläche (14) bildet, die ein in Abstand angeordnetes Messobjekt (11) abhängig von dessen Bewegung parallel zur Messfläche (14) unterschiedlich bedeckt.

Ähnliche Vorrichtungen, jedoch im Gegensatz zur anmeldungsgemäßen Wegmessung, zur Abstandsmessung sind vielfältig bekannt.

So z. B. aus der DE 196 42 699 A1, die ein Verfahren und Vorrichtung zur berührungslosen Abstandsmessung betrifft, bei der eine Zylinderspule in einem Messkopf angeordnet ist und sich die Stirnfläche des Messkopfes zum Messen in einem geringen Abstand zum Messobjekt, z. B. einer Turbinenwelle, befindet.

Bei derartigen Wirbelstromsensoren wird das aus dem Sensor austretende Magnetfeld in Abhängigkeit vom Abstand zu dem zu messenden Objekt, nachfolgend auch Messobjekt oder Messkörper mit Bedämpfungsfahne, Messbund, Target o. dgl. genannt, bedämpft. D.h., die Bedämpfung ist proportional zum Abstand des Messobjektes zur Spule, so dass eine Bewegung in Richtung der Spulenachse oder Längsachse erfasst werden kann. Um z. B. die radialen Schwingungen einer Turbinenwelle zu erfassen, kann der Welle radial ein entsprechender induktiver Sensor mit entsprechend ausgerichteter Längsachse zugeordnet werden. Aufgrund physikalischer Abhängigkeiten resultieren bei vorgegebenen Spulendurchmessern und vertretbaren Messbereichen, im Stand der Technik ist dies der Abstand zwischen Spulenstirnfläche und Messobjekt, erhebliche Größenanforderungen an das Messobjekt selbst. Eine axiale Änderung der Turbinenwelle ist damit zwar auch erfassbar, in dem ein entsprechender Sensor mit seiner Längsachse in axialer Richtung der Wellenstirnfläche zugeordnet wird. Jedoch auch hier gilt die vorstehende Abhängigkeit, so dass für einen erforderlichen Messbereich, im Stand der Technik ist dies der Abstand, erhebliche Abmessungen der Gegenstände erforderlich werden. Dennoch sind Wirbelstromsensoren vorteilhaft wegen ihrer Robustheit und ihrer hohen möglichen Betriebstemperaturen und hohen Grenzfrequenzen einsetzbar.

Im Stand der Technik ist auch allgemein bekannt, eine axiale Erstreckung dadurch zu erfassen, dass die bekannten Abstandssensoren in einem vorbekannten Winkel zum Messobjekt angeordnet werden. Die vorbeschriebene Problematik besteht jedoch auch hier.

D. h., berührungslose Wegsensoren nach dem Wirbelstromprinzip eigenen sich gut für Abstandsmessungen, während Stellungsmessungen mit diesen Sensoren z. B. eine schiefe Ebene etwa am Messobjekt erfordern, um mit dem Abstandssignal gleichzeitig einer Weganteil zu erfassen.

In der Dissertation "Untersuchung eines induktiven Spiralsensors als Wegaufnehmer und Anwendung des Sensorelementes in Mikroelektronik-Systemen", Fortschritt-Berichte VDI Reihe 8 Nr. 120. VDI-Verlag, Düsseldorf, 1986, von Dieter Kohn, werden Flachspulen, die mit Leiterplattentechnik hergestellt wurden, untersucht. Ziel war, einen einfachen und prinzipnahen Sensor mit einer Mikrorechner-Elektronik zu kombinieren, wobei im Mikrorechner die Linearisierung, Temperaturkompensation und Kalibrierung vorgenommen werden soll. Die Flachspulen werden ebenfalls zur Abstandsmessung eingesetzt. Aber auch hier wird angestrebt, das gesamte Feld der Spule in Messrichtung auf das Messobjekt zu richten. Die durch das Spulenfeld hervorgerufene Wirbelstrombildung im Messobjekt bewirkt über die Rückwirkung auf die Messpule eine Erhöhung des Verlustwiderstandes der Messpule. Diese Änderung des Verlustwiderstandes beim bekannten Verfahren wird in der Regel als Dämpfungsänderung in einem Schwingkreis ausgewertet. Die ebenfalls auftretende Änderung der Induktivität, bei nichtmagnetischen Messobjekten ergibt sich eine Verringerung der Induktivität, bei magnetischen Messobjekten eine Erhöhung der Induktivität, bleibt dabei unberücksichtigt. Hier findet somit tatsächlich auch nur eine Abstandsmessung statt. Darüberhinaus werden Flachspulen für Wirbelstromsensoren im Stand der Technik kaum benutzt, da durch die Leiterzwischenräume die Bündelung des magnetischen Feldes sehr viel schlechter ist als bei herkömmlich gewickelten Drahtspulen.

Dies ist jedoch bei der üblichen Abstandsmessung mit wirbelstromsensoren äußerst wichtig. Denn ausgehend von der Sensorspule werden über das sich ausbreitende magnetische Feld Wirbelströme im Messobjekt erzeugt, weshalb das Feld möglichst groß sein soll. Das Messobjekt muß dabei leitend und kann auch magnetisch sein. Das von den Wirbelströmen erzeugte Feld baut ein Feld auf, das dem Erregerfeld entgegengesetzt ist. Die Wirkung ist dabei umso stärker, je näher sich das Messobjekt an der Sensorspule befindet. Der nur schwierig zu erfassende theoretische Formelzusammenhang ist z. B. "Systemtechnik induktiver Weg- und Kraftaufnehmer, Aufnehmer und Anschlussgeräte", expert Verlag, Ehningen bei Böblingen, 1992, von Horst Rudolf Loos, Seite 52 ff. zu entnehmen. Die erzeugten Wirbelströme wirken danach dem erregenden Feld entgegen und verringern die Selbstinduktivität der Erregerspule. Der Verlustwiderstand der Kurzschlusswindung hängt dabei von der Leitfähigkeit des Objektmaterials und vom Abstand zwischen Erregerspule und Objekt ab. Ist das Messobjekt zusätzlich magnetisch, so wird diese Rückwirkung auf die Erregerspule durch die wirksame Permeabilität berücksichtigt.

Die Sensorspule ist i. d. R. Bestandteil eines Schwingkreises mit einer recht hohen Resonanzfrequenz von 1 bis 2 Megahertz. Die Wirbelströme des Messobjektes verursachen eine vom Abstand des Messobjektes abhängige Bedämpfung des Schwingkreises, die dann ausgewertet wird. Alle im Stand der Technik bekannten induktiven Sensoren arbeiten nach vorstehendem Prinzip, also der Beeinflussung/Dämpfung des aus der Spule austretenden Magnetfeldes, abhängig von deren axialem Abstand vom Messobjekt.

Aus dem Beitrag von Otto Danz "Relativdehnungsaufnehmer zur Turbinenüberwachung", in der Zeitschrift Energie und Technik, Oktober 1969, Seite 406 bis 408, ist ein Prinzip eines Differenzübertragers für eine Wegmessung bekannt. Danach bildet der Messbund der Turbinenwelle einen niederohmigen magnetischen Widerstand, so dass die Spannung an der Messspule von der Stellung des Messbundes abhängt. An den Klemmen der Sekundärspule wird nur dann ein Ausgangsignal gemessen, wenn die Symmetrie gestört wird. Dies geschieht, wenn der Messbund sich aus der Mittellage bewegt. Bei Verwendung eines phasengesteuerten Gleichrichters wird auch die Richtung der Verlagerung erkannt. Dieses aufwendige Prinzip ist für Arbeitstemperaturen bis ca. 350°C und zu messende Wege bis ca. 40 mm geeignet.

Ferner sind berührungslose Langwegaufnehmer aus "Robuste Wegsensoren für extreme Belastungen. SENSOR '83 Transducer-Technik: Entwicklung und Anwendung", Konferenz Basel 17. - 19. Mai 1983, von D. Krause und "Linearer, kontaktloser Umformer für große Wege sowie hohe thermische und dynamische Belastung", Messen + Prüfen/Automatik, Januar/Februar 1981, Seite 43/45, von D. Krause bekannt. Bei derartigen Sensoren wird als Messobjekt ein Kurzschlussring benutzt, der über einen Schenkel des Sensors berührungslos bewegt wird. Allerdings tritt bei diesen Wegaufnehmern besonders nachteilig eine physikalisch bedingte Nichtlinerarität auf.

In der FR-A-2 682 760 ist ein Prinzip zur Weglängenmessung offenbart, das auf der positionsabhängigen Kopplung von zwei Spulen beruht.

Die WO 97 39312 A lehrt die positionsabhängige Erkennung der Induktivitätsänderung zur Wegmessung.

Der in der DE 42 13 866 A beschriebene Positionssensor beruht auf dem Prinzip der positionsabhängigen Ermittlung der Kennwerte der Induktivitäten, wobei gemäß Anspruch 13 Schlitze zur Verringerung von Wirbelströmen vorgesehen werden.

Aus der DE 198 32 854 A1 ist eine Einrichtung zur Messung von linearen Verschiebungen eines Rohres mit Hilfe eines koaxial im Rohr angeordneten stabförmigen Sensors bekannt, der schon eine Kopplung zum Messobjekt nur schwer ermöglicht.

Die im Stand der Technik bekannten Vorrichtungen und induktiven Sensoren sind daher nur wenig geeignet, die der vorliegenden Erfindung zugrundeliegende Aufgabe befriedigend zu lösen.

Aufgabe der vorliegenden Erfindung ist es, eine Vorrichtung zur berührungslosen Wegmessung, insbesondere zur Stellungs- und Bewegungserkennung eines Meßobjektes zu schaffen, die äußerst einfach mit integrierender Technik aufgebaut ist und weitgehend unabhängig vom berührungslosen Abstand zu einem Messobjekt direkt dessen Bewegung oder Stellung orthogonal zur Spulenachse erfasst.

Diese Aufgabe wird erfindungsgemäß dadurch gelöst, dass eine rechteckige Messfläche diagonal geteilt je eine dreieckige Flachspule hat, wobei deren Induktivitäten und Widerstände eine Hälfte einer Brückenschaltung bilden, deren andere Hälfte mit Widerständen zur Vollbrücke ergänzt ist

Überraschenderweise hat sich gezeigt, dass gute Messergebnisse zur Wegmessung erzielt werden, wenn ein Target oder ein Messkörper im Gegensatz zu den herkömmlichen Sensoren (zur Abstandsmessung) in einem konstanten Abstand über die Oberfläche einer Flachspule geführt wird, wobei nur die vom Target abgedeckten Bereiche bedämpft werden. Ein lineares Verhalten kann einfach über die Geometrie der Messfläche der Flachspulen sichergestellt werden.

Die erfindungsgemäße Anordnung ist besonders vorteilhaft, da sie gleichzeitig zur Kompensation des Abstandseinflusses dient. Bei unerwünschter radialer Bewegung des Messobjektes findet nämlich eine gegenläufige Änderung der Induktivitäten und Widerstände der beiden Spulen statt, die, ergänzt zu einer Vollbrücke mit Widerständen, eine abstandsunabhängige Messung ermöglichen.

Gemäß einer besonderen Ausgestaltung ist ferner vorgesehen, dass ein zweiter Sensor, mit diagonal in zwei Flachspulen geteilter Messfläche, derart angeordnet ist, dass das Messobjekt symmetrisch zwischen beiden Sensoren liegt und die je zwei Flachspulen jedes Sensors die Induktivitäten und Widerstände je einer Hälfte der Brückenschaltung bilden. Hierdurch kann eine Signalverdopplung bei gleichzeitiger Kompensation des unerwünschten radialen Abstandseinflusses erfolgen. In Verbindung mit einem phasenrichtigen Gleichrichter kann eine vorzeichenrichtige Bewegung des Messobjektes aus der Nullage heraus angezeigt werden.

Vorteilhaft ist ferner vorgesehen, dass eine rechteckige Messfläche diagonal geteilt zwei dreieckige Flachspulen hat, wobei die Induktivität und der Widerstand einer Flachspule und ein Ergänzungswiderstand eine Hälfte einer Brückenschaltung bilden, deren andere Hälfte diagonal mit Induktivität und Widerstand und einem weiteren Ergänzungswiderstand zur Vollbrücke ergänzt ist. Insbesondere im Fall der zunehmenden Vollabdeckung einer entsprechend geteilten Flachspule hat diese Diogonalbrücke eine qualitativ hohe und weitgehend verzerrungsfreie Auswertung gezeigt, die die für beide Flachspulen zunehmende Abdeckung in geeigneter Weise berücksichtigt.

Anmeldungsgemäß ist ferner vorgesehen, dass das Target oder der Messbund dem Messobjekt angepasst und/oder rechteckig und/oder bogenförmig und/oder ringförmig ist. Insbesondere im Fall von Messungen von Kolbenstellungen von Druckluft- oder Pneumatikzylindern sowie eines Konusses von Durchflussmessgeräten kann hierdurch eine einfache Anpassung an den Messzweck erfolgen.

Ferner ist anmeldungsgemäß vorgesehen, dass die Messfläche des Sensors zur Bewegungsmessung von Kugeln oder Rollen in Lagern in deren zentraler Nähe angeordnet ist und eine kleinere Querschnittsfläche als das Messobjekt aufweist. Hierdurch ist die Vorrichtung sogar geeignet, sicher die Bewegungen von Kleinstteilen ohne sonstige technische Aufwendungen zu gewährleisten.

Ferner ist vorteilhaft vorgesehen, dass die Messfläche des Sensors kreisbogenförmig ist, um eine Bewegung auf einem Kreisbogen zu erfassen. Hierdurch sind selbst Winkelmessungen möglich, d.h., eine Wegstreckenmessung entlang eines Kreisbogens.

Ferner ist vorteilhaft vorgesehen, dass die Messfläche des Sensors in einem Bereich gewünschter größter Auflösung eine große Flächenänderung hat. Hierdurch sind beispielsweise charakteristische Signalbilder beim Vorbeibewegen von bestimmten Formteilen, wie z. B. Münzen, erzielbar, so dass sich die erfindungsgemäße Vorrichtung auch zum Sortieren z. B. von Münzen eignet.

Ferner ist erfindungsgemäß vorgesehen, dass ein Gleichrichter intetraler Bestandteil der Sensorelektronik ist. Wie bereits erwähnt, ist es in Verbindung mit einem phasenrichtigen Gleichrichter ohne weiteres möglich, eine vorzeichenrichtige Bewegung des Messobjektes aus der Nullage heraus anzuzeigen.

Vorteilhaft ist vorgesehen, dass eine Schmitt-Trigger-Elektronik integraler Bestandteil der Sensorelektronik ist und die Sensorelektronik ein Schwellensignal abgibt. Hierdurch können Schwellenwertschalter gebaut werden.

Vorteilhaft ist ferner vorgesehen, dass die Vorrichtung vollständig in einem Gehäuse angeordnet ist. Hierdurch ist sie kompakt und geschützt von Umwelteinflüssen auch bei robusten Umgebungsbedindungen sicher einsetzbar. Erfindungsgemäß ist ferner vorgesehen, dass die Messfläche eine dreieckige oder quadratische oder rechteckige oder kreisförmige oder eliptische Grundfläche mit schneckenförmiger Anordnung der Leiter hat. Hierdurch ist es auf einfache Weise möglich, je nach Anwendungszweck eine Messfläche zu bilden, die ein linerares Verhalten gewährleistet.

Erfindungsgemäß ist ferner vorgesehen, dass der Sensor einen Träger und/oder eine Ferritplatte hat und die Ferritplatte die Flachspule direkt oder eine Stützplatte trägt, die die Flachspule aufnimmt. Danach kann die Flachspule direkt auf einer Ferritplatte angeordnet sein, die der Verbesserung des Spulenfeldes und der Abschirmung von Störfeldern auf der Rückseite dient. Ferner kann zwischen Ferritplatte und Flachspule eine Stützplatte angeordnet sein. Die Stützplatte dient insbesondere dem Einsatz im Hochtemperaturbereich. Darüberhinaus kann vorgesehen sein, dass die Ferritplatte auf einem Träger angeordnet ist. Der Träger dient in der Regel einer robusten Lagerung der Ferritplatte.

Vorteilhaft ist ferner vorgesehen, dass der Träger aus Metall oder Keramik oder Kunststoff oder Leiterplattenmaterial, die Ferritplatte aus einem ferrimagnetischen Material oder einer Keramik mit entsprechenden magnetischen, elektrischen Eigenschaften und die Stützplatte aus Glas oder Keramik sind. Wie bereits erwähnt, dient der Träger einer robusten Lagerung und kann quasi aus beliebigem Material hergestellt sein. Er lässt sich folglich gut z. B. in bestehende Aufbauten integrieren. Die Ferritplatte ist aus vorstehendem Material, um insbesondere eine elektromagnetische Abschirmung zu gewährleisten. Somit kann der Träger auch aus Metall sein, da anderenfalls der metallische Träger die Wirkungen eines Messobjektes auf die Flachspule haben würde. Anstelle der Ferritplatte können auch bestimmte Keramiken Verwendung finden, die entsprechende magnetische, elektrische Eigenschaften aufweisen. Die Stützplatte weist durch die verwendeten Materialien eine gute Eignung für hohe Temperaturen z. B. bis ca. 380°C auf.

Vorteilhaft ist ferner vorgesehen, dass die Flachspule auf der Ferritplatte oder der Stützplatte aufgesputtert oder aufgedruckt ist und die Stützplatte vollständig im Bereich der Flachspule auf der Ferritplatte aufliegt. Hierdurch sind besonders einfache und genaue, aber im Low-Cost-Bereich angesiedelte Herstellungsverfahren möglich, wobei gerade die Mehrebenentechnik sogar eine einfache aber genaue Verstärkung des Magnetfeldes zur Folge haben kann.

Erfindungsgemäß ist ferner vorgesehen, dass die Sensorelektronik integraler Bestandteil des induktiven Sensors ist. Insbesondere aufgrund der möglichen Verwendung von der Sputter- und Drucktechnik sowie von normalen Leiterbahnen ist die Integration der Sensorelektronik besonders einfach.

Vorteihaft ist ferner vorgesehen, dass die Steuerelektronik integraler Bestandteil des induktiven Sensors und der Flachspule ist. Hierdurch ist es sogar möglich, die Sensorelektronik platzsparend direkt im Bereich der Flachspulen anzuordnen.

Ferner ist vorteilhaft vorgesehen, dass die Flachspule Bestandteil eines elektrischen Schwingkreises ist und eine in die Sensorelektronik integrierte Brückenschaltung zu deren Bedämpfung bzw. Auswertung bei Frequenzen von Kilohertz bis Megahertz aufweist. Hierdurch können quasi alle mit der Dünnschichttechnik zusammenhängenden Vorteile genutzt werden. Die Sensorelektronik wird dadurch einfach herstellbar und kann aufgrund einer Brückenschaltung auch mit einfachen Bauelementen ausgerüstet sein, die für die genannten Frequenzen geeignet sind.

Vorteilhaft ist ferner vorgesehen, dass die Flachspule ganz oder teilweise direkt auf einen Siliziumchip gedruckt oder gesputtert ist, der auch alle weiteren Schaltungen aufweist. Hierdurch können anmeldungsgemäß Standardbauteile von höchster Qualität und Präzision direkt eingesetzt werden.

Weiter ist vorteilhaft vorgesehen, dass das die Messfläche beeinflussende Messobjekt elektrisch leitend ist oder das Messobjekt ein elektrisch leitendes Target oder Messbund aufweist und abhängig von dessen Stellungen eine geometrisch vorbestimmbare Spulenfläche der Flachspule abdeckt. Hierdurch kann ein elektrisch leitendes Messobjekt, das zusätzlich magnetisch sein kann, direkt die Messfläche beeinflussen. Im Fall einer Längserstreckung einer Turbinenachse sogar zunehmend abdecken. Es ist auch denkbar, im Fall eines elektrisch nicht leitenden Messobjektes ein Target darauf/daran anzuordnen und dies entsprechend wirken zu lassen/auszunutzen. Allerdings ist es auch denkbar, ein schmales Target, ähnlich einem Streifen, zu verwenden, welches sich über die Messfläche bewegt und aufgrund der Geometrie der Messfläche unterschiedlich viel Spulenfläche abdeckt. Die unterschiedliche Bedämpfung ist dann Maß für die Bewegung.

Diese Anordnung ist besonders vorteilhaft, da sie gleichzeitig zur Kompensation des Abstandseinflusses dient. Bei unerwünschter radialer Bewegung des Messobjektes findet nämlich eine gegenläufige Änderung der Induktivitäten und Widerstände der beiden Spulen statt, die, ergänzt zu einer Vollbrücke mit Widerständen, eine abstandsunabhängige Messung ermöglichen.

Zusammengefasst liegt somit der Erfindung eine Messspule als Flachspule zugrunde, die in einem konstanten, geringen Abstand von einem Messobjekt berührungslos überquert wird. Beispielsweise kann, zwecks linearen Verhaltens, die Messfläche dreieckig ausgeführt sein. Mit einem Messbund auf einer Turbinenwelle kann somit und damit die Axialerstreckung der Turbinenwelle erfasst werden. Hierbei wird ausgenutzt, dass das von jedem Stromleiter um sich herum ausgebildete Magnetfeld durch die örtliche Bedeckung des Messobjektes nur entsprechend der Bedeckungsfläche über den Wirbelstromeffekt beeinflusst wird. Bei der Bewegung des Messobjektes von einer zu einer anderen Position findet in Abhängigkeit vom Messweg eine zunehmende oder abnehmende Abdeckung von Leiterteilen der Messspule statt. Das Messobjekt kann dabei die Messspule als Streifen überqueren oder aber als z. B. rechteckiges Messobjekt zunehmend vollständig abdecken. Die Umformung des Messweges in ein elektrisches Messsignal kann bei den bekannten Methoden über einen Schwingkreis, dessen Induktivität aus der Messspule besteht und von einem Osszilator gespeist wird, vorgenommen werden. Besonders vorteilhaft für die Erfindung hat sich die Anwendung einer Wechselstrombrückenschaltung erwiesen. Die z. B. dreieckige Flachspule repräsentiert eine Induktivität und einen Widerstand und eine entgegengesetzte weitere dreieckige Flachspule, die die erste zu einem Rechteck ergänzt, repräsentiert eine weitere Induktivität und einen weiteren Widerstand. Bei Bewegung des Messobjektes von der einen zu einer anderen Position findet eine gegenläufige Änderung der Induktivitäten und Widerstände in den Flachspulen statt. Diese Induktivitäten und Widerstände bilden eine Hälfte einer Brückenschaltung und können auf der anderen Hälfte mit Widerständen zu einer Vollbrücke ergänzt werden. Damit kann eine zur Verlagerung des Messobjektes proportionale Messspannung zwischen den Messpunkten einer Brückenschaltung abgenommen werden. In Verbindung mit einem phasenrichtigen Gleichrichter kann somit eine vorzeichenrichtige Bewegung des Messobjektes aus der Nullage heraus angezeigt werden. Die Vorteile der Brückenschaltung liegen insbesondere in der Reduzierung der Temperaturabhängigkeit der Messeffekte und in der Abstandsabhängigkeit. Hierzu kann zur Verdopplung des Messsignals eine symmetrische weitere Sensoranordnung vorgesehen sein. Eine Diagonalbrückenschaltung hat die weiter oben beschriebenen Vorteile.

Weitere bevorzugte Ausgestaltungen der Erfindung ergeben sich aus den Unteransprüchen.

Ein Ausführungsbeispiel der Erfindung wird nachfolgend anhand einer Zeichnung näher erläutert. Darin zeigt:
- Fig. 1: schematisch eine erfindungsgemäße Vorrichtung bezüglich eines Messobjektes mit einem Sensor,
- Fig. 2: schematisch eine erfindungsgemäße Vorrichtung gemäß Fig. 1 mit zwei Sensoren,
- Fig. 3: schematisch die Messfläche eines Sensors einer erfindungsgemäßen Vorrichtung, und
- Fig. 4: ein Ersatzschaltbild einer Brückenschaltung zur Ermittlung des Messergebnisses bei Mehrspulensensoren.

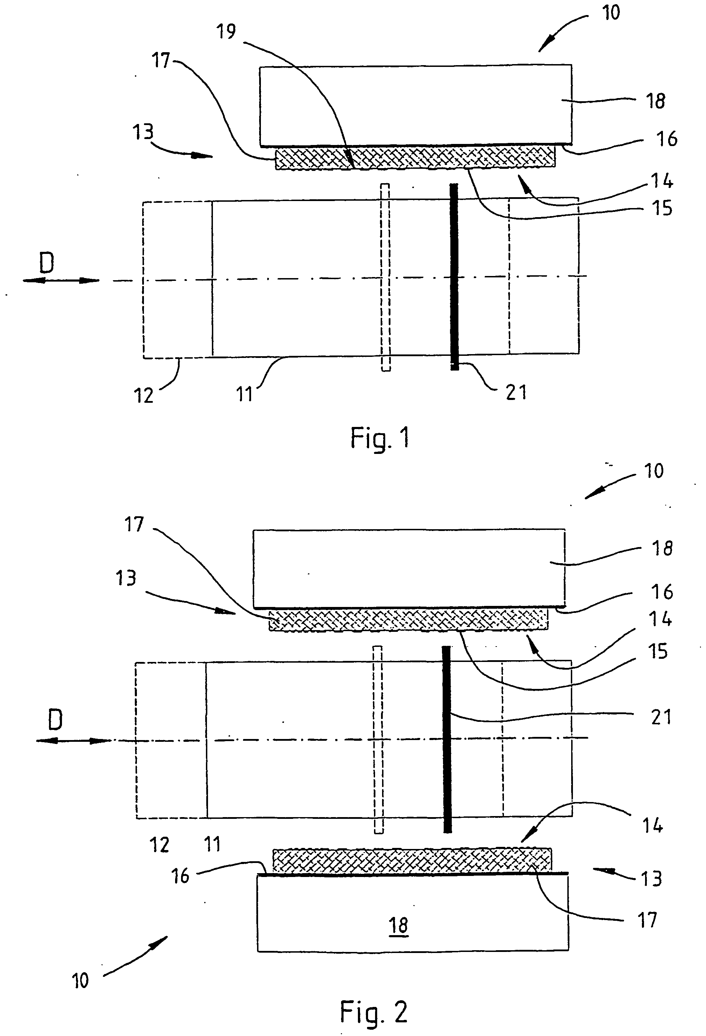

Fig. 1 zeigt eine erfindungsgemäße Vorrichtung 10 zur berührungslosen Wegmessung, beispielsweise einer Welle 11, die eine Turbinenwelle sein kann und sich in ihrer Längserstreckung, in Fig. 1 von rechts nach links, bewegt, wie dies mit unterbrochenen Linien 12 und Pfeil D angedeutet ist. Die Vorrichtung 10 weist einen induktiven Sensor 13 auf, der zur Welle 11 in Abstand angeordnet ist. Der Sensor 13 hat eine plane Messfläche 14, die von einer Flachspule 15 gebildet wird.

Die Flachspule 15 kann direkt auf einer Ferritplatte 16 angeordnet sein oder zunächst auf einer Stützplatte 17, die ihrerseits auf der Ferritplatte 16 angeordnet ist. Die Ferritplatte 16 ist ihrerseits wiederrum auf einem Träger 18 angeordnet, der ihr Halt verleiht und aus quasi beliebigem Material gefertigt sein kann, wie beispielsweise Metall, Kunststoff, Leiterplattenmaterial oder auch einer Keramik. Die Ferritplatte 16 ist aus ferrimagnetischem Material oder auch einer Keramik mit entsprechenden elektrischen, magnetischen Eigenschaften. Sie dient der Abschirmung elektromagnetischer Effekte seitens des Trägers 18, der daher auch aus Metall aufgebaut sein kann. D. h., die von der Messfläche 14 abgewandte zweite Oberfläche 19 der Flachspule 15 ist fest auf einem Untergrund angeordnet und frei von jeglichen elektromagnetischen Einstrahlungen. Die Stützplatte 17 dient i. d. R. als thermisch robuste Stütze der Flachspule 15. Durch die Verwendung von Glas oder Keramik für die Stützplatte 17 können Temperaturen von bis zu 380°C sicher erreicht werden.

Eine besonders einfache Vorrichtung 10 kann bei besonderer Wahl der Materialien sogar lediglich aus der Ferritplatte 16 und der darauf direkt angeordneten Flachspule 15 bestehen. Die Stützplatte 17 und Träger 18 entfallen.

Die Vorrichtung 10 umfaßt ferner, allerdings nicht weiter dargestellt, eine Sensorelektronik mit Schwingkreisen etc., eine Brückenschaltung 20 und eine Gleichrichterschaltung mit den erforderlichen Elementen und Verbindungen.

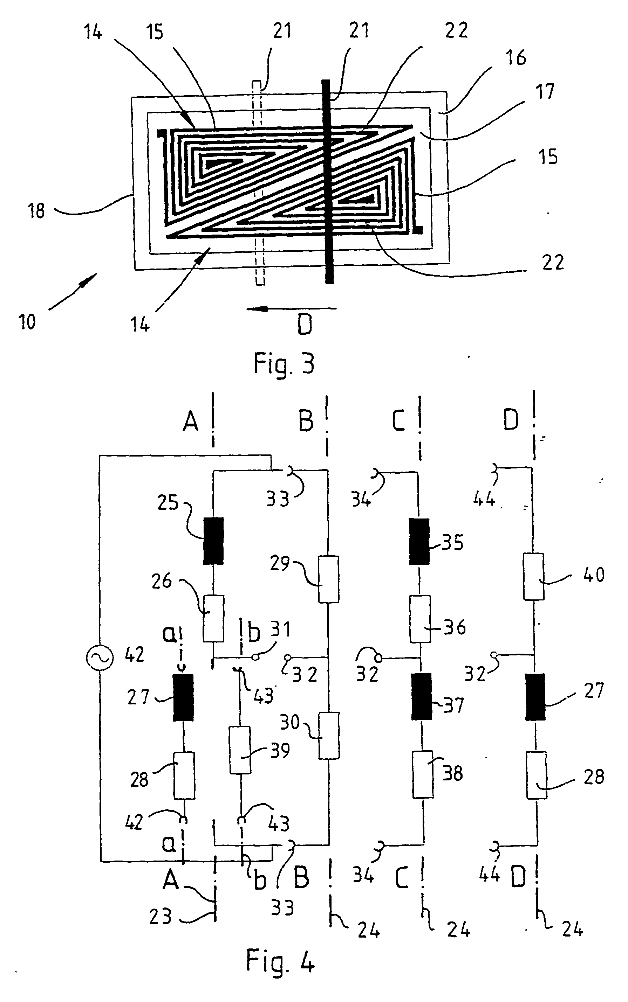

Die Welle 11 bewegt sich in Richtung des Pfeils D. Sie trägt ein Messbund/Target 21, welches elektrisch leitend sein muß und auch magnetisch sein kann. Bei Bewegung in Richtung Pfeil D bewegt sich die Welle 11 und damit auch das Target 21 parallel und orthogonal zur Messfläche 14. Die Messfläche 14 der Flachspule 15 weist mindestens einen Leiter 22 je Flachspule 15 auf, der in der Ebene der Messfläche 14 schneckenförmig angeordnet ist. Vorteilhaft kann der Leiter 22 derart schneckenförmig angeordnet sein, dass die Grundfläche der Messfläche 14 dreieckförmig ist. Bereits ohne Fig. 3 zu studieren, ist es vorstellbar, dass im Fall einer dreieckförmigen Messfläche 14 bei Bewegung des Targets 21 mehr oder weniger Leiter 22 durch das Target 21 abgedeckt werden. Im Target 21 werden dadurch mehr oder weniger Wirbelströme erzeugt, die letztlich bedämpfend auf den induktiven Sensor 21 wirken und die Auswertung eines Stellungssignals ermöglichen. Bei einer bestimmten Materialwahl kann auch die Welle 21 selbst durch stärkere oder weniger starke Abdeckung der Messfläche 14 ein entsprechendes Signal ermöglichen.

Im Fall von anderen zu erfassenden Bewegungen kann der Leiter 22 geometrisch anders angeordnet sein, so z. B. eine quadratische oder rechteckige oder kreisförmige oder eliptische Messfläche 14 gebildet wird. Vorteilhaft hat sich jedoch gezeigt, dass im Fall der dargestellten Längserstreckungsmessung einer Welle 11 radiale Bewegungen, aufgrund von Vibrationen etc. der Welle 11 selbst, zu Messschwankungen führen, da das elektromagnetische Feld zur Flachspule 15 stark abstandsabhängig ist. Dieser Einfluß lässt sich anmeldungsgemäß äußerst einfach dadurch eliminieren, dass eine weitere dreieckförmige Messfläche 14 derart zusammen mit einer ersten Flachspule 15 angeordnet ist, dass eine diagonal geteilte rechteckige oder quadratische Gesamt/Messfläche 14 entsteht. Bei einer entsprechenden Auswertung können die Änderungen der entgegengesetzten Spulensignale zu einer Eliminierung des Abstandseffektes führen.

Fig. 2 zeigt zwei Vorrichtungen 10, deren Messflächen 14 parallel und in Abstand zueinander und gegenüberliegend angeordnet sind. Der Abstand zwischen den Messflächen 14 ist derart bemessen, dass die Welle 11 symmetrisch zwischen beiden Vorrichtungen 10 angeordnet sein kann. Bei gleicher sonstiger Ausgestaltung der einzelnen Vorrichtungen 10 und auch der Welle 11 mit Target 21 kann hierdurch auf einfachste Weise eine Signalverdoppelung erzielt werden. Selbstverständlich ist es auch möglich, weitere Vorrichtungen 10 im Umfangsbereich der Welle 11 entsprechend anzuordnen und extern die einzelnen von den Vorrichtungen 10 gewonnenen Daten einer Auswertung zuzuführen. Hierdurch kann nicht nur eine Verstärkung des Ausgangssignals erzielt werden, sondern auch die Messgenauigkeit erhöht werden, wie auch die Erfassung komplexer Oberflächenverschiebungen auf einem Gegenstand, die z. B. bei Zugversuchen beliebiger Gegenstände entstehen.

Fig. 3 zeigt die Vorrichtung 10 in einer Draufsicht auf die Messfläche 14. Gut erkennbar sind zwei Flachspulen 15 mit je einem Leiter 22 mit je dreieckförmiger Grundfläche, wobei die Flachspulen 15 sich zu einer rechteckigen Gesamt/Messfläche 14 ergänzen. Auch hier ist das Target 21 angedeutet, das in Richtung Pfeil D bewegt wird, bis zur gestrichelten Darstellung 21 und dabei unterschiedlich viele Spulenabschnitte, letztendlich Flächen der Flachspulen 15 erfasst bzw. bedeckt. Entsprechend der Geometrie findet dies gegenläufig statt, d. h., bei der einen Spule findet dies zunehmend statt, bei der anderen Spule 15 gleichermaßend abnehmend. Die plane Messfläche 14 ist dabei zentral auf der Stützplatte 17 angeordnet, die wiederrum auf der größeren Ferritplatte 16 befestigt ist. Die Ferritplatte 16 hat immer eine größere Erstreckung als die Messfläche 14 und damit auch der Stützplatte 17, um eine sichere vollständige Abschirmung der Messfläche 14, also des induktiven Sensors 12 auf der Seite der Oberfläche 19 zum Träger 18 sicherzustellen.

Obgleich nicht dargestellt, kann die Steuerelektronik mit allen Elementen, so auch dem Schwingkreis, der Brückenschaltung 20, ggf. einem Schmitt-Trigger etc. mit der gleichen Technik wie auch die Flachspule 15 selbst ausgebildet sein und direkt auf der Meßfläche 14 angeordnet werden. Besonders vorteilhaft hat sich hierfür die Sputter-Technik erwiesen oder auch die Technik von gedruckten Schaltungen, auch direkt auf einen Siliziumchip, der dann auch die elektrischen Schaltungen enthalten kann. Beides sind Techniken, die einschichtig oder mehrschichtig ausgeführt werden können und zu einem geringen Preis bei hoher Güte erhältlich sind.

Fig. 4 zeigt eine Brückenschaltung 20. Die Brückenschaltung 20 besteht aus einer ersten Hälfte 23 gemäß Linie A-A mit alternativen im unteren Brückenzweig gem. Linie a-a und b-b und einer zweiten Hälfte 24 gemäß Linie B-B oder C-C oder D-D. Es handelt sich vorzugsweise um eine Wheatstonesche Brückenschaltung für Wechselstrom. Im Fall nur einer Vorrichtung gemäß Fig. 1 mit einer Gesamt/Messfläche 14 mit zwei Flachspulen 15 gemäß Fig. 3 und einem schmalen Target 21 hat sich eine Brückenschaltung 20 als vorteilhaft erwiesen, bei der die Induktivität 25 und der Widerstand 26 der ersten Flachspule 15 und die Induktivität 27 und der Widerstand 28 der zweiten Flachspule 15 in der ersten Hälfte 23 gem. Linie A-A und a-a in Kontakt sind. Die angedeuteten Stecker 42 sind in Kontakt gebracht. Durch Bewegung des Targets 21 gem. Fig. 3 findet eine gegenläufige Änderung der entsprechenden Induktivitäten 25 und 27 und Widerstände 26 und 28 andererseits statt. Die Widerstände 29 und 30 bilden in diesem Fall die Brückenergänzung zur Vollbrücke in der zweiten Hälfte 24 gemäß Linie B-B der Brückenschaltung 20. Zwischen den Messpunkten 31, 32 kann die zur Verlagerung des Messobjektes proportionale Messpannung abgegriffen werden. In diesem Fall sind die angedeuteten Stecker 33 in Kontakt gebracht.

Im Fall von zwei Sensoren 13 gemäß Fig. 2 mit jeweils zwei Flachspulen 15 je Gesamt/Messfläche 14 kann gemäß einer vorteilhaften und äußerst einfachen Brückenschaltung 20 bei unverändert geschalteter erster Hälfte 23 statt der zweiten Hälfte 24 gemäß B-B die zweite Hälfte 24 gemäß C-C über die Stecker 34 kontaktiert werden, die die erste Hälfte 23 der Brückenschaltung 20 gemäß Linie A-A und a-a zur Vollbrücke ergänzt. Die Induktivität 35 und der Widerstand 36 repräsentieren die Kennwerte der ersten Flachspule 15 des zweiten Sensors 13 und die Induktivität 37 und der Widerstand 38 die Kennwerte der zweiten Flachspule 15 des zweiten Sensors 13. Auch hier kann eine zur Verlagerung des Messobjektes proportionale Messpannung zwischen den Messpunkten 31 und 32 abgenommen werden. In Verbindung mit einem phasenrichtigen, nicht dargestellen Gleichrichter kann eine vorzeichenrichtige Bewegung des Messobjektes 11 aus der Nullage heraus angezeigt werden.

Im Fall von einem Sensor 13 gem Fig. 2, mit zwei Flachspulen 15 gem. Fig. 3 und einem die Gesamt/Messfläche 14 zunehmend oder abnehmend abdeckenden Target 21 hat sich eine Brücken-Diagonal-Schaltung 20 als äußerst vorteilhaft erwiesen, bei der die Induktivität 25 und der Widerstand 26 der ersten Flachspule 15 der ersten Hälfte 23 gem. Linie A-A im oberen Brückenzweig, die Induktivität 27 und der Widerstand 28 der zweiten Spule 15 in der zweiten Hälfte 24 gem. Linie D-D im unteren Brückenzweig angeordnet sind, wobei die zweite Hälfte 24 über die Stecker 44 in Kontakt kommt. Die die Brückenschaltung ergänzenden Widerstände 39 und 40 werden in der ersten Hälfte 23 gem. Linie A-A und b-b über die Stecker 43 bzw. in der zweiten Hälfte 24 im oberen Brückenzweig angeschlossen bzw. angeordnet. Bei dieser Diagonalbrückenschaltung 20 kann eine zur Verlagerung des Messobjektes proportionale Messpannung zwischen den Messpunkten 31 und 32 abgenommen werden.

Die Vorteile der vorgeschlagenen Brückenschaltung 20 liegen insbesondere in der Reduzierung der Temperaturabhängigkeit der Messeffekte und der Abstandsabhängigkeit.

## Patentansprüche

1. Vorrichtung zur berührungslosen Wegmessung, insbesondere für Stellungs- und Bewegungserfassungen eines Meßobjektes, mit einer Sensorelektronik zur Bereitstellung eines Wechselstromes und Auswertung dessen Änderungen und einem induktiven Sensor mit mindestens einer Spule, wobei jede Spule (15) mit in einer Ebene schneckenförmig angeordnetem Leiter (22) ausgebildet ist und eine von dessen zwei ebenen Oberflächen eine Messfläche (14) bildet, die ein in Abstand angeordnetes Messobjekt (11) abhängig von dessen Bewegung parallel zur Messfläche (14) unterschiedlich bedeckt, **dadurch gekennzeichnet, daß** eine rechteckige Messfläche (14) diagonal geteilt je eine dreieckige Flachspule (15) hat, wobei deren Induktivitäten (25, 27) und Widerstände (26, 28) eine Hälfte (23) einer Brückenschaltung (20) bilden, deren andere Hälfte (24) mit Widerständen (29, 30) zur Vollbrücke ergänzt ist.

2. Vorrichtung nach Anspruch 1, **dadurch gekennzeichnet, dass** ein zweiter Sensor (13), mit diagonal in zwei Flachspulen (15) geteilter Messfläche (14), derart angeordnet ist, dass das Messobjekt (11) symmetrisch zwischen beiden Sensoren (13) liegt und die je zwei Flachspulen (15) jedes Sensors (13) die Induktivitäten (25, 27 und 35, 37) und Widerstände (26, 28 und 36, 38) je einer Hälfte (23, 24) der Brückenschaltung (20) bilden.

3. Vorrichtung nach einem oder mehreren der vorhergehenden Ansprüche, **dadurch gekennzeichnet, dass** eine rechteckige Messfläche (14) diagonal geteilt zwei dreieckige Flachspulen (15) hat, wobei die Induktivität (25) und der Widerstand (26) einer Flachspule (15) und ein Ergänzungswiderstand (39) eine Hälfte (23) einer Brückenschaltung (20) bilden, deren andere Hälfte (24) diagonal mit Induktivität (27) und Widerstand (28) und einem weiteren Ergänzungswiderstand (40) zur Vollbrücke ergänzt ist.

4. Vorrichtung nach Anspruch 1, **dadurch gekennzeichnet, dass** die Messfläche (14) eine dreieckige oder quadratische oder rechteckige oder kreisförmige oder eliptische Grundfläche mit schneckenförmiger Anordnung der Leiter (x22) hat.

5. Vorrichtung nach Anspruch 2, **dadurch gekennzeichnet, dass** der Sensor (13) eine Ferritplatte 16) hat und die Ferritplatte (16) die Flachspule (15) direkt oder eine Stützplatte (17) trägt, die die Flachspule (15) aufnimmt.

6. Vorrichtung nach Anspruch 3, **dadurch gekennzeichnet, dass** der Träger (18) aus Metall oder Keramik oder Kunststoff oder Leiterplattenmaterial, die Ferritplatte (16) aus einem ferrimagnetischen Material oder einer Keramik mit entsprechenden magnetischen, elektrischen Eigenschaften und die Stützplatte (17) aus Glas oder Keramik sind.

7. Vorrichtung nach Anspruch 4, **dadurch gekennzeichnet, dass** die Flachspule (15) auf der Ferritplatte (16) oder der Stützplatte (17) aufgesputtert oder aufgedruckt ist und daß für den Fall, daß die Flachspule auf der Stützplatte aufgesputtert oder aufgedruckt ist, die Stützplatte (17) vollständig im Bereich der Flachspule (15) auf der Ferritplatte (16) aufliegt.

8. Vorrichtung nach einem oder mehreren der vorhergehenden Ansprüche, **dadurch gekennzeichnet, dass** die Vorrichtung das Meßobjekt (11) umfaßt, wobei das die Messfläche (14) beeinflussende Messobjekt (11) elektrisch leitend ist oder das Messobjekt (11) ein elektrisch leitendes Target (21) oder Messbund (21) aufweist und abhängig von dessen Stellungen eine geometrisch vorbestimmbare Spulenfläche der Flachspule (15) abdeckt.

9. Vorrichtung nach dem Anspruch 8, **dadurch gekennzeichnet, dass** das Target (21) oder der Messbund (21) dem Messobjekt (11) angepasst und/oder rechteckig und/oder bogenförmig und/oder ringförmig ist.

10. Vorrichtung nach einem oder mehreren der vorhergehenden Ansprüche, **dadurch gekennzeichnet, dass** die Messfläche (14) des Sensors (13) zur Bewegungsmessung von Kugeln oder Rollen in Lagern parallel zu einer Bewegungsrichtung (D) des Meßobjektes (11) verlaufend angeordnet ist und eine kleinere Querschnittsfläche als das Messobjekt (11) aufweist.

11. Vorrichtung nach einem oder mehreren der vorhergehenden Ansprüche, **dadurch gekennzeichnet, dass** die Messfläche (14) des Sensors (13) kreisbogenförmig ist, um eine Bewegung auf einem Kreisbogen zu erfassen.

## Claims

1. A device for the contact-free path measurement, in particular for positional and movement detection of a measurement object, with sensor electronics for providing an alternating current and for evaluating its changes, and with an inductive sensor with at least one coil, wherein each coil (15) is designed with a conductor (22) arranged in a plane in a volute manner and one of the two plane surfaces of the conductor forms a measurement surface (14), which covers a measurement object (11) arranged at a distance, to a different extent depending on its movement parallel to the measurement surface (14), **characterised in that** a rectangular measurement surface (4) divided diagonally in each case has a triangular flat coil (15), wherein their inductances (25, 27) and resistances (26, 28) form one half (23) of bridge circuit (20) whose other half (24) is supplemented with resistances (29, 30) into the full bridge.

2. A device according to claim 1, **characterised in that** a second sensor (13) with a measurement surface (14) divided diagonally into two flat coils (15) is arranged in a manner such that the measurement object (11) lies symmetrically between both sensors (13) and the in each case two flat coils (15) of each sensor (13) form the inductances (25, 27 and 35, 37) and resistances (26, 28 and 36, 38) in each case of one half (23, 24) of the bridge circuit (20).

3. A device according to one or more of the preceding claims, **characterised in that** a rectangular measurement surface (14) divided diagonally has two triangular flat coils (15), wherein the inductance (25) and the resistance (26) of one flat coil (15) and a supplementary resistance (39) form one half (23) of a bridge circuit (20) whose other half (24) is diagonally supplemented with an inductance (27) and resistance (28) and with a further supplementary resistance (40) into the full bridge.

4. A device according to claim 1, **characterised in that** the measurement surface (14) has a triangular or square or rectangular or circular or elliptical base surface with a volute arrangement of the conductors (x22).

5. A device according to claim 2, **characterised in that** the sensor (13) has a ferrite plate (16) and the ferrite plate (16) carries the flat coil (15) directly, or a support plate (17) which accommodates the flat coil (15).

6. A device according to claim 3, **characterised in that** the carrier (18) is of metal or ceramic or plastic or circuit board material, the ferrite plate (16) of a ferromagnetic material or of a ceramic with suitable magnetic and electrical properties and the support plate (17) of glass or ceramic.

7. A device according to claim 4, **characterised in that** the flat coil (15) is sputtered or printed on the ferrite plate (16) or the support plate (17) and that for the case that the flat coil is sputtered or printed on the support plate, the support plate (17) lies completely on the ferrite plate (16) in the region of the flat coil (15).

8. A device according to one or more of the preceding claims, **characterised in that** the device embraces the measurement object (11), wherein the measurement object (11) influencing the measurement surface (14) is electrically conductive or the measurement object (11) comprises an electrically conductive target (21) or measurement collar (21) and depending on its positions, covers a geometrically predefinable coil surface of the flat coil (15).

9. A device according to claim 8, **characterised in that** the target (21) or the measurement collar (21) is adapted to the measurement object (11) and/or is rectangular and/or curved and/or annular.

10. A device according to one or more of the preceding claims, **characterised in that** the measurement surface (14) of the sensor (13) for movement measurement of balls or rollers in bearings is arranged running parallel to a movement direction (D) of the measurement object (11) and has a smaller cross-sectional area than the measurement object.

11. A device according to one or more of the preceding claims, **characterised in that** the measurement surface (14) of the sensor (13) is circular arc shaped in order to detect a movement on a circular arc.

## Revendications

1. Dispositif pour mesurer le déplacement sans contact, notamment pour saisir la position et le mouvement d'un objet à mesurer, avec un système électronique à capteurs pour fournir un courant alternatif et pour exploiter les modifications de celui-ci et avec un capteur inductif avec au moins une bobine, chaque bobine (15) étant configurée avec un conducteur (22) disposé en forme d'hélice sur un même plan et formant parmi ses deux surfaces planes une surface de mesure (14) qui, en fonction du mouvement parallèle à la surface de mesure (14) d'un objet à mesurer (11) disposé avec un espacement, couvre de manière différente cet objet à mesurer, **caractérisé en ce qu'**une surface de mesure rectangulaire (14) comprend dans une division en diagonale respectivement une bobine plate triangulaire (15), alors que les résistances inductives (25, 27) et les résistances ohmiques (26, 28) de celle-ci forment une moitié (23) d'un circuit en pont (20) dont l'autre moitié (24) est complétée par des résistances ohmiques (29, 30) pour former un pont complet.

2. Dispositif selon la revendication 1, **caractérisé en ce qu'**un deuxième capteur (13) avec une surface de mesure (14) divisée en diagonale en deux bobines plates (15) est disposé de telle façon que l'objet à mesurer (11) se trouve de manière symétrique entre les deux capteurs (13) et que les respectivement deux bobines plates (15) de chaque capteur (13) forment les résistances inductives (25, 27 et 35, 37) et les résistances ohmiques (26, 28 et 36, 38) de respectivement une moitié (23, 24) du circuit en pont (20).

3. Dispositif selon l'une quelconque ou plusieurs des revendications précédentes, **caractérisé en ce qu'**une surface de mesure rectangulaire (14) comprend dans une division en diagonale respectivement deux bobines plates triangulaires (15), alors que la résistance inductive (25) et la résistance ohmique (26) d'une bobine plate (15) et une résistance ohmique de complément (39) forment une moitié (23) d'un circuit en pont (20) dont l'autre moitié (24) est complétée en diagonale avec une résistance inductive (27) et une résistance ohmique (28) ainsi qu'avec une autre résistance ohmique de complément (40) pour former un pont complet.

4. Dispositif selon la revendication 1, **caractérisé en ce que** la surface de mesure (14) possède une surface de base triangulaire ou quadratique ou rectangulaire ou circulaire ou elliptique avec une disposition en forme d'hélice des conducteurs (x22).

5. Dispositif selon la revendication 2, **caractérisé en ce que** le capteur (13) comprend une plaque en ferrite (16) et **en ce que** la plaque en ferrite (16) porte directement la bobine plate (15) ou une plaque de support (17) sur laquelle est logée la bobine plate (15).

6. Dispositif selon la revendication 3, **caractérisé en ce que** le matériau constitutif du support (18) est du métal ou de la céramique ou du matériau synthétique ou du matériau pour cartes de circuits imprimés, celui de la plaque en ferrite (16) du matériau ferrimagnétique ou une céramique avec des propriétés magnétiques et électriques correspondantes et celui de la plaque de support (17) du verre ou de la céramique.

7. Dispositif selon la revendication 4, **caractérisé en ce que** la bobine plate (15) est appliquée par crépitement ou par impression sur la plaque en ferrite (16) ou sur la plaque de support (17) et **en ce que**, pour le cas où la bobine plate est appliquée par crépitement ou par impression sur la plaque de support, la plaque de support (17) repose entièrement sur la plaque en ferrite (16) dans la zone de la bobine plate (15).

8. Dispositif selon l'une quelconque ou plusieurs des revendications précédentes, **caractérisé en ce que** le dispositif comprend l'objet à mesurer (11), alors que l'objet à mesurer (11) exerçant une influence sur la surface de mesure (14) est électroconducteur ou que l'objet à mesurer (11) comprend une cible électroconductrice (21) ou une bande de mesure électroconductrice (21) et recouvre, indépendamment de ses positions, une surface de bobine de la bobine plate (15) qui peut être prédéterminée en ce qui concerne sa géométrie.

9. Dispositif selon la revendication 8, **caractérisé en ce que** la cible (21) ou la bande de mesure (21) est adaptée à l'objet à mesurer (11) et/ou est rectangulaire et/ou en forme d'arc et/ou en forme d'anneau.

10. Dispositif selon l'une quelconque ou plusieurs des revendications précédentes, **caractérisé en ce que**, pour mesurer le déplacement de billes ou de rouleaux dans des roulements, la surface de mesure (14) du capteur (13) est disposée en s'étendant parallèlement à un sens de déplacement (D) de l'objet à mesurer (11) et comprend une surface de section plus petite que l'objet à mesurer (11).

11. Dispositif selon l'une quelconque ou plusieurs des revendications précédentes, **caractérisé en ce que** la surface de mesure (14) du capteur (13) à la forme d'un arc de cercle pour saisir un mouvement sur un arc de cercle.
